# EUROPÄISCHE PATENTSCHRIFT

(11) **EP 2 168 073 B1**
(45) Veröffentlichungstag und Bekanntmachung des Hinweises auf die Patenterteilung: **30.11.2011**
(21) Anmeldenummer: 08761412.9
(22) Anmeldetag: 02.07.2008
(51) Int. Cl.: G06K 7/10, A47J 31/36

(54) **ABLESEVERFAHREN FÜR STRICHCODES IN EINER GETRÄNKEMASCHINE UND VORRICHTUNG DAFÜR**
METHOD FOR READING BARCODES IN A DRINKS MACHINE, AND APPARATUS THEREFOR
PROCÉDÉ DE LECTURE DE CODES À BARRES DANS UN DISTRIBUTEUR DE BOISSONS ET DISPOSITIF ASSOCIÉ

(30) Priorität: 11.07.2007 DE 102007032287
(43) Veröffentlichungstag der Anmeldung: 31.03.2010
(73) Patentinhaber: Kraft Foods R & D, Inc., Northfield, IL 60093 (US)
(72) Erfinder: BEUTLROCK, Maximilian, 83361 Kienberg (DE); GIUS, Josef, 83374 Traunwalchen (DE); STRAUB, Stephan, 83101 Rohrdorf (DE)
(74) Vertreter: Heinemann, Monica
(86) Internationale Anmeldenummer: PCT/EP2008/058536
(87) Internationale Veröffentlichungsnummer: WO 2009/007292

(56) Entgegenhaltungen:
- WO-A-2006/081466
- GB-A- 2 411 105

## Beschreibung

Die Erfindung betrifft ein Verfahren einer Zubereitungsvorrichtung für Getränke mit einem Lesegerät zum Erfassen eines Abbildes eines ein- oder mehrdimensionalen Musters auf einer in einer offenen Brühkammer der Vorrichtung eingesetzten Getränke- oder Servicedisk, die vor dem Start des Zubereitungs- oder Servicevorgangs in einem Schließvorgang der Brühkammer von einer Beladeposition über Zwischenpositionen in eine Verschlussposition gebracht wird. Die Erfindung betrifft außerdem ein Lesegerät zur Durchführung dieses Verfahrens und eine Getränkezubereitungsvorrichtung mit einem derartigen Lesegerät.

Ein- oder mehrdimensionale Muster dienen als graphischer Schlüssel für Informationen und sind aus kontrastreich angeordneten Flächen zusammengesetzt. Ein Beispiel für ein eindimensionales Muster sind so genannte Bar-, Balken- oder Strichcodes,. Zweidimensionale Muster sind zum Beispiel mosaikförmig aufgebaut. Eine dritte Dimension der Muster kann in der Verwendung von Farben bestehen. Die Muster werden in Signale oder Steuerbefehle zum Betrieb der Zubereitungsvorrichtung umgesetzt. Gewöhnlich wird das Muster nicht unmittelbar ausgewertet, sondern zunächst dessen Abbild erfasst und anschließend dessen charakteristische Eigenschaften in Steuerungsinformationen umgesetzt.

Je nach Beschaffenheit der Oberfläche einer Ware oder deren Verpackung, auf der das Muster aufgebracht ist, kann das Abbild aufgrund seiner optisch mangelhaften Qualität nicht oder nicht vollständig ausgewertet werden. So können Spiegelungen der Beleuchtung des Lesegeräts oder von ungünstig einfallendem Umgebungslicht zu einer Blendung des Lesegeräts führen, die das Abbild unkenntlich machen.

Aus der WO 2006/081466 A2 ist daher ein Verfahren bekannt, bei dem von jedem Muster mehrere Abbilder gemacht werden. Kann ein erstes Abbild nicht bzw. nicht vollständig ausgewertet werden, so wird es mit einem zweiten Abbild desselben Musters überlagert, um die fehlende Information zu erhalten. Das zweite Abbild wird dazu aus einer von dem ersten Abbild abweichenden Perspektive aufgenommen, indem es zum Beispiel aus einem anderen Winkel beleuchtet oder erfasst wird. Diese Methode erfordert einen hohen gerätetechnischen Aufwand.

Die EP 1 593 329 B1 offenbart daher eine Vorrichtung zum Auslesen eines Musters auf einer Getränkedisk für eine Getränkezubereitungsmaschine, bei der die Oberfläche, auf der das Muster aufgebracht ist, beim Ablesen mechanisch gestreckt wird. Dadurch soll eine ideale Ausrichtung der das Muster tragenden Oberfläche gegenüber der Leseeinrichtung erzielt werden.

GB-A-2 411 105 beschreibt einen Einsatz, enthaltend Getränkebestandteile, der einen Barcode auf einer seiner Oberflächen aufweist. Des Weiteren wird ein Getränkezubereitungssystem beschrieben, das zur Aufnahme eines solchen Einsatzes ausgestaltet ist, umfassend eine Kartuschen-Erkennungseinrichtung, wie ein Strichcode-Lesegerät, das den Strichcode abtastet, nachdem der Brühkopf, in welchen eine Kartusche als besagter Einsatz eingesetzt wurde, ordnungsgemäß geschlossen worden ist.

Aufgabe der vorliegenden Erfindung ist es, ein alternatives Verfahren anzugeben, das eine zuverlässige Auswertung eines Musters ermöglicht, ohne den dafür erforderlichen technischen Aufwand nennenswert zu erhöhen.

Erfindungsgemäß wird diese Aufgabe mit einem Verfahren der oben genannten Art dadurch gelöst, dadurch dass das Lesegerät aktiviert wird, bevor die Brühkammer verschlossen ist, so dass zumindest ein Abbild des Musters vor Erreichen der Verschlussposition erfasst wird. Die Erfindung verfolgt somit auch das Prinzip, das Muster aus unterschiedlichen Perspektiven zu erfassen. Dabei werden die unterschiedlichen Perspektiven unter entsprechendem zusätzlichem technischem Aufwand nicht "künstlich" durch unterschiedliche Beleuchtungswinkel oder Erfassungsrichtungen erzeugt. Die Erfindung macht sich vielmehr die Bewegung des Musters während des Schließvorgangs der Brühkammer und damit seine unterschiedlichen räumlichen Positionen relativ zum Lesegerät zu nutze. Dabei ist es unerheblich, ob das Muster während des Schließvorgangs zwischen der Belade- und der Verschlussposition parallel verschoben, verschwenkt oder gedreht wird. Denn beim Verschließen der Brühkammer ergeben sich zwischen der Belade- und der Verschlussposition jedenfalls Abstände zwischen Muster und Lesegerät und dadurch unterschiedliche Lichtverhältnisse und Ausleuchtungsgrade des Musters. Sie können erfindungsgemäß genutzt werden, Abbilder desselben Musters mit unterschiedlicher optischer Charakteristik zu erhalten.

Eine unterschiedliche Belichtung kann auch durch eine unterschiedliche Neigung des Musters gegenüber dem Lesegerät erzielt werden. Selbst bei einer Parallelverschiebung des Musters während des Schließvorgangs können unterschiedliche Neigungen dadurch erreicht werden, dass die Erfassungsrichtung des Lesegeräts nicht in Verschiebungsrichtung des Musters angeordnet ist, sondern seine "Blickachse" einen Winkel mit der Verschiebungsrichtung des Musters einschließt.

Prinzipiell kann also jede beliebige Verschlussbewegung zur Generierung unterschiedlicher Abbilder genutzt werden. Nach einer vorteilhaften Ausgestaltung der Erfindung wird das Muster beim Schließen der Brühkammer geschwenkt. Auch hier nimmt das Muster selbstverständlich unterschiedliche Abstände vom Lesegerät ein. Bei einer Schwenkbewegung des Musters während des Schießvorgangs durchläuft es von sich aus zusätzlich noch mehrere Positionen unterschiedlicher Neigung gegenüber dem Lesegerät. Beides zusammen ermöglicht stark unterschiedliche Erfassungssituationen zur Generierung unterschiedlicher Abbilder desselben Musters. Sollte also etwa beim ersten Abbild das Muster oder nur ein Teil davon aufgrund einer Blendung bzw. Spiegelung nicht auswertbar sein, so besteht durch die Winkeländerung beim Schließvorgang der Brühkammer die hohe Wahrscheinlichkeit, dass beim zweiten und jedem weiteren Bild die Blendung bzw. Spiegelung nicht mehr auftritt. Eine Schwenkbewegung sorgt im Allgemeinen für eine stärkere Winkeländerung des Musters gegenüber dem Lesegerät als eine Parallelverschiebung.

Erfindungsgemäß werden also bereits vor dem Verschließen der Brühkammer Abbilder bzw. zumindest ein Abbild des Musters erfasst. Nach einer weiteren vorteilhaften Ausgestaltung des erfinderischen Verfahrens wird ein erstes Abbild des Musters bereits in der Beladeposition der Brühkammer erfasst. Das erste Abbild entsteht also in einer Position mit einer maximal unterschiedlichen Beleuchtungscharakteristik gegenüber der Verschlussposition. Dadurch kann ein Abbild mit einem möglichst großen Unterschied zu dem letztmöglichen Abbild in der Verschlussposition erzielt werden. Der frühe Zeitpunkt der ersten Erfassung kann außerdem dazu benutzt werden, in der Zeit bis zum vollständigen Verschluss der Brühkammer das erste Abbild auszuwerten, um gegebenenfalls ein zweites Abbild zum Beispiel nach dem Verschließen der Brühkammer zu generieren. Damit kann die Zeitspanne bis zum Einsetzen des Zubereitungs- oder Servicevorgangs verkürzt werden, weil die dafür erforderlichen Steuerungsinformationen frühzeitig vorliegen.

Das Lesegerät kann zum Beispiel durch ein eigenes Schaltersignal zu Beginn der Verschießbewegung eingeschaltet werden. Um weitere Zeit zu gewinnen, kann es aber auch schon mit Einschalten der Zubereitungsvorrichtung oder mit ihrem Anschluss an eine Stromversorgung aktiviert werden. Sobald eine Disc in die Brühkammer eingesetzt wird, kann dann das erste Abbild generiert werden.

Wird das erste Abbild in der Beladeposition der Brühkammer genommen, so kann die bis zum vollständigen Verschluss der Brühkammer verbleibenden Zeit nach einer weiteren vorteilhaften Ausgestaltung der Erfindung auch dazu genutzt werden, das erste Abbild auf Verwendbarkeit, also Erkennbarkeit und Auswertbarkeit seiner charakteristischen Eigenschaften und der Entschlüsselung der Steuerungsinformationen, zu überprüfen und im negativen Fall zumindest ein weiteres Abbild noch vor Erreichen der Verschlussposition zu generieren. Dadurch steigt die Wahrscheinlichkeit, ein vollständig erkennbares Abbild des Musters zu erhalten. Die Möglichkeit, in der Verschlussposition ein Abbild des Musters zu generieren, bleibt dabei unverändert erhalten. Somit stehen mindestens drei Abbilder zur Erfassung des Musters zur Verfügung. Dieses Verfahren spart also weitere Zeit ein, so dass die Zubereitungsvorrichtung frühzeitig in Betrieb gehen kann.

Je mehr Abbilder des Musters erfasst werden können, umso höher ist die Wahrscheinlichkeit, ein verwendbares Abbild zu erhalten. Es besteht jedoch die Gefahr, dass keines der generierten Abbilder vollständig auswertbar ist. Nach einer weiteren vorteilhaften Ausgestaltung der Erfindung werden daher mehrere Abbilder, die für sich alleingenommen nicht vollständig auswertbar sind, einander überlagert. Dadurch können nicht erkennbare Bereiche eines Abbildes durch erkennbare Bereiche eines anderen ergänzt werden. So kann die Erfassung des Musters auch durch mindestens zwei für sich genommen nicht verwertbare Abbilder gelingen. Separat nicht vollständig auswertbare Abbilder müssen also nicht verworfen werden, sondern können zusammen mit weiteren das gewünschte Ergebnis erzielen. Dadurch kann die Anzahl erforderlicher Abbilder reduziert und der Aufwand für das Erfassen des Musters verringert werden. Dies führt zugleich zu einer Zeitersparnis, weil die gewünschte Steuerungsinformation für das Zubereitungsgerät früher vorliegen kann.

In dem vorbeschriebenen Verfahren werden während des Verschließens der Brühkammer nicht nur die Abbilder erfasst, sondern durch deren Auswertung gegebenenfalls auch das Erfordernis weiterer Abbilder festgestellt. Aufgrund der Kürze der für den Schließvorgang benötigten Zeit ist für die Abwicklung dieser Vorgänge eine erhebliche Rechnerleistung einer Steuerungseinrichtung erforderlich. Nach einer alternativen Ausgestaltungsform des erfinderischen Verfahrens können daher während des Schließvorgangs der Brühkammer mehrere Abbilder in unterschiedlichen Winkelstellungen des Musters gegenüber dem Lesegerät erfasst und erst anschließend, also nach Verschluss der Brühkammer, auf Erkennbarkeit hin ausgewertet werden. Damit gliedert sich das Leseverfahren in einen Erfassungsabschnitt der Abbilder während des Schließvorgangs der Brühkammer und einen Auswerteabschnitt nach Verschluss der Brühkammer. Dadurch kann die Kapazität des Rechners geringer ausfallen.

Mit dem Auswerteprozess kann unabhängig von der Erfassung der Abbilder auch schon während des Schließvorgangs begonnen werden, so dass sich die Zeitspannen der Erfassung der Abbilder während des Schließvorgangs einerseits und der Auswertung der Bilder andererseits überdecken bzw. überschneiden können. Durch die Überschneidung bzw. durch den zumindest teilweise gleichzeitigen Ablauf beider Vorgänge kann die Zeitspanne bis zum Vorliegen der Steuerungsinformation wiederum verkürzt werden. Die Auswertung der Abbilder kann dabei entweder in der Reihenfolge der Erstellung der Abbilder erfolgen, so dass die Auswertung mit einem geringfügigen Zeitversatz gegenüber der Erfassung der Abbilder ablaufen kann. Erfolgen die Erfassung der Abbilder und deren Auswertung dagegen zeitlich getrennt nacheinander, so kann eine beliebige Reihenfolge der Auswertung der Abbilder vorgenommen werden. Vorteilhafterweise wird mit dem ersten Bild begonnen und im Falle seiner nichtvollständigen Verwertbarkeit eine Überlagerung mit dem letzten Bild vorgenommen. Dies erhöht die Wahrscheinlichkeit, dass mit möglichst wenigen Auswerte- und Überlagerungsvorgänge ein vollständig verwertbares Abbild des Musters erhalten wird, weil das erste und das letzte Abbild sich am meisten unterscheiden.

Es ist nicht auszuschließen, dass bei den vorgenannten Verfahren in der Verschlussposition trotz der Erfassung mehrerer Abbilder durch unglückliche Umstände kein vollständig verwertbares Abbild des Musters vorliegt, also die Steuerungsinformation nicht abgelesen werden kann. Grundsätzlich kann dann eine Fehlermeldung am Gerät ausgegeben werden, die den Benutzer der Zubereitungsvorrichtung auffordert, den Vorgang zu wiederholen. Nach einer weiteren vorteilhaften Ausgestaltung der Erfindung kann jedoch beim Verschließen der Brühkammer in bekannter Weise durch ein Streckelement am Lesegerät eine Oberfläche der Disk, auf der das Muster aufgebracht ist, mechanisch gestreckt werden. Durch die Streckung der Oberfläche können Spiegelungen oder Blendungen, die die Erfassung des Abbildes beeinträchtigen vermieden werden. Zusätzlich oder alternativ zur mechanischen Streckung kann das Muster außerdem in der Verschlussposition unter verschiedenen Winkel beleuchtet und/oder erfasst werden. Dadurch wird nach Abschluss des Verschließvorgangs der Brühkammer noch einmal die Möglichkeit eröffnet, weitere Abbilder unter veränderten optischen Bedingungen zu generieren.

Die oben genannte Aufgabe wird außerdem durch ein Lesegerät der eingangs genannten Art gelöst, das erfindungsgemäß über eine Steuerungseinrichtung verfügt, die dazu ausgebildet ist, die Erfassung mehrerer Abbilder eines Musters während des Schließens der Brühkammer nach den oben erläuterten Verfahren zu ermöglichen. Im Gegensatz zum Stand der Technik verfügt die Steuerungseinrichtung also über entsprechende Berechnungskapazitäten, die eine schnelle Verarbeitung der generierten Abbilder leistet.

Grundsätzlich kann das Lesegerät mit dem Einschalten der Zubereitungsvorrichtung oder mit deren Anschluss an eine Stromversorgung aktiviert werden. Nach einer vorteilhaften Ausgestaltung des Lesegeräts verfügt es über einen Schalter oder Sensor zur Erfassung des Beginns der Bewegung zum Verschließen einer Brühkammer oder ihrer Beladung mit einer Disc. Der Schalter oder der Sensor geben ein Signal an die Steuereinrichtung ab, das das Lesegerät einschaltet und damit den Zeitpunkt für den Beginn der Erfassung von Abbildern angibt. Denn frühestens mit dem Einsetzen einer Disc in die Brühkammer und spätestens mit dem Beginn ihrer Verschließbewegung kann das Lesegerät Abbilder eines Musters erfassen. Das separate Einschalten des Lesegeräts spart also Energie für dessen Betrieb, die vorher sinnlos aufgewandt würde.

Nach einer weiteren vorteilhaften Ausgestaltung des Lesegeräts umfasst es einen Prozessor für seine Steuerung, wobei der Prozessor und/oder sein Speicher für die Zwischenspeicherung der Abbilder mit einem Prozessor bzw. Speicher der Zubereitungsvorrichtung kombiniert sind. Dadurch können der gerätetechnische Aufwand und die Herstellungskosten reduziert werden.

Im Folgenden wird die Erfindung anhand einer Zeichnung im Prinzip beispielshalber noch näher erläutert. In der Zeichnung zeigen:
- Figur 1:: eine perspektivische Ansicht einer geöffneten Brühkammer einer Getränkezubereitungsvorrichtung,
- Figur 1a:: eine Getränkekapsel,
- Figur 2:: die Brühkammer in einer Schnittansicht,
- Figur 3:: eine geschlossene Brühkammer in einer Schnittansicht,
- Figuren 4-6:: Ablaufdiagramme für das Arbeitsverfahren des Lesegeräts.

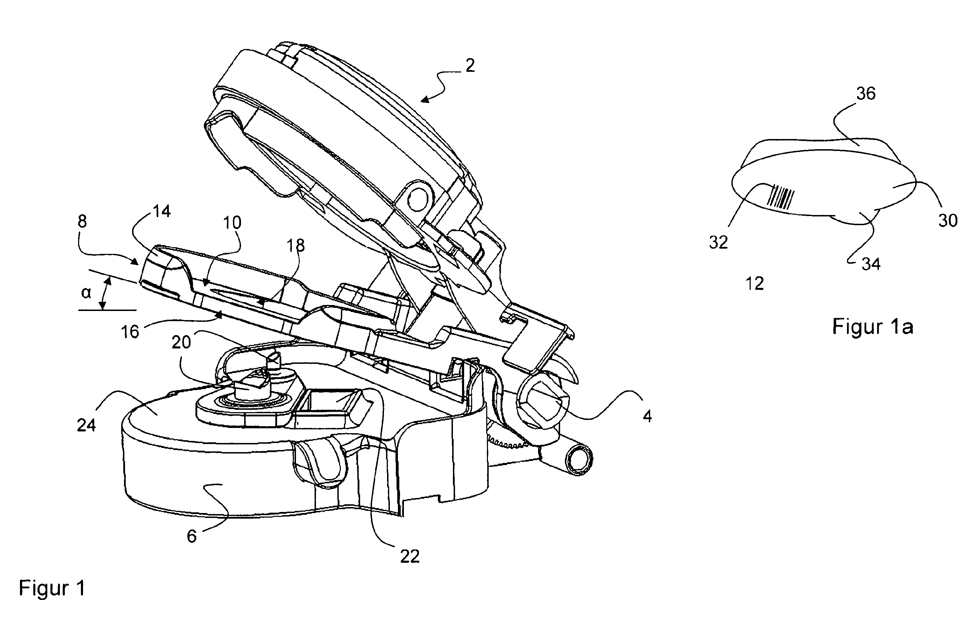

Eine Brühkammer einer Getränkezubereitungsvorrichtung, die mit Kapseln oder Getränkedisks betrieben wird, umfasst gemäß Figur 1 ein Brühkammer-Oberteil 2, das über ein Scharnier 4 gegenüber einem Brühkammer-Unterteil 6 schwenkbar gelagert ist. Zwischen dem Brühkammer-Oberteil 2 und dem Brühkammer-Unterteil 6 befindet sich eine Kapselträger 8, der ebenfalls am Scharnier 4 gelenkig gelagert ist. Der Kapselträger 8 umfasst eine Auflagefläche 10 für eine Disk oder Kapsel 12. Die Auflagefläche 10 umzieht eine kreisförmige Aufkantung 14, die an einer Positionieröffnung 16 unterbrochen ist. Die Auflagefläche 10 des Kapselträgers 8 ist in der Mitte durch einen Durchlass 18 unterbrochen, so dass die Auflagefläche 10 im Wesentlichen ringförmig ausgebildet ist.

Das Brühkammer-Unterteil 6 trägt auf seiner Oberseite 24 neben Anstichkronen 20 ein Fenster 22. Sowohl die Anstichkronen 20 als auch das Fenster 22 blicken in geschlossenem Zustand der Brühkammer durch den Durchlass 18 hindurch in Richtung Brühkammer-Oberteil 2. Unter dem Fenster 22 ist ein Lesegerät für die Erfassung eines Strichcodes auf der Kapsel 12 angebracht.

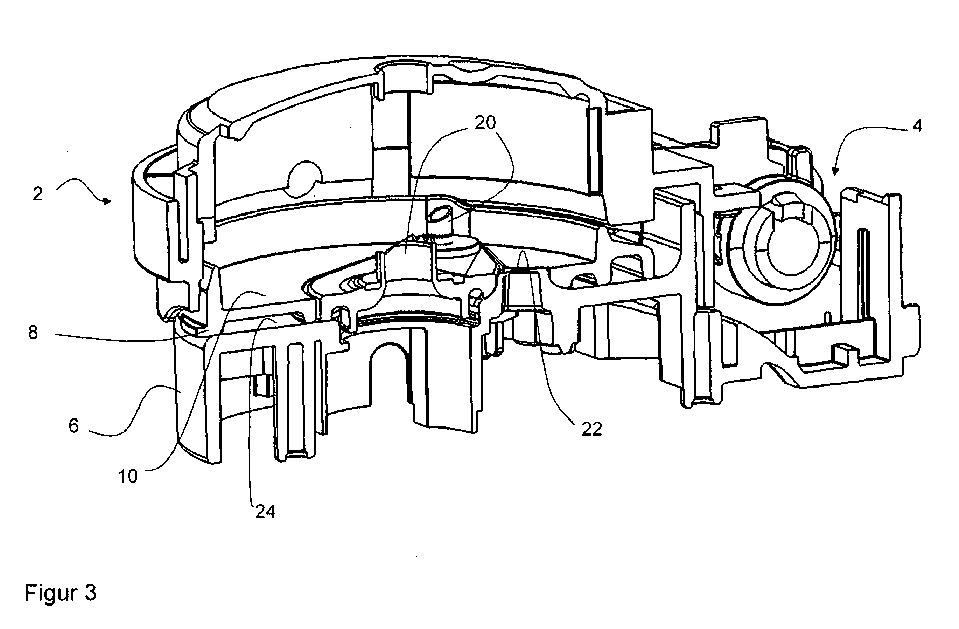

Die Kapsel 12 nach Figur 1a enthält in ihrem Oberteil 36 ein Substrat für die Zubereitung eines Getränks. Sie trägt auf ihre Unterseite 30 als Muster einen Strichcode 32, in dem Steuerungsinformationen für die Zubereitung des Getränks verschlüsselt sind. An einem Rand der Kapsel 12 ist eine laschenförmige Positioniernase 34 ausgebildet. Für den Betrieb der Zubereitungsvorrichtung wird die Kapsel 12 bei aufgeklappter Brühkammer, also in deren Beladeposition gemäß Figur 1, auf der Auflagefläche 10 des Kapselträgers 8 abgelegt. Die Brühkammer lässt sich nur verschließen, wenn die Positioniernase 34 in die Positionieröffnung 16 eingelegt wird. Dadurch ist sichergestellt, dass der Strichcode 32 bei verschlossener Brühkammer (vgl. Figur 3) durch den Durchlass 18 und das Fenster 22 hindurch von dem Lesegerät erfasst werden kann

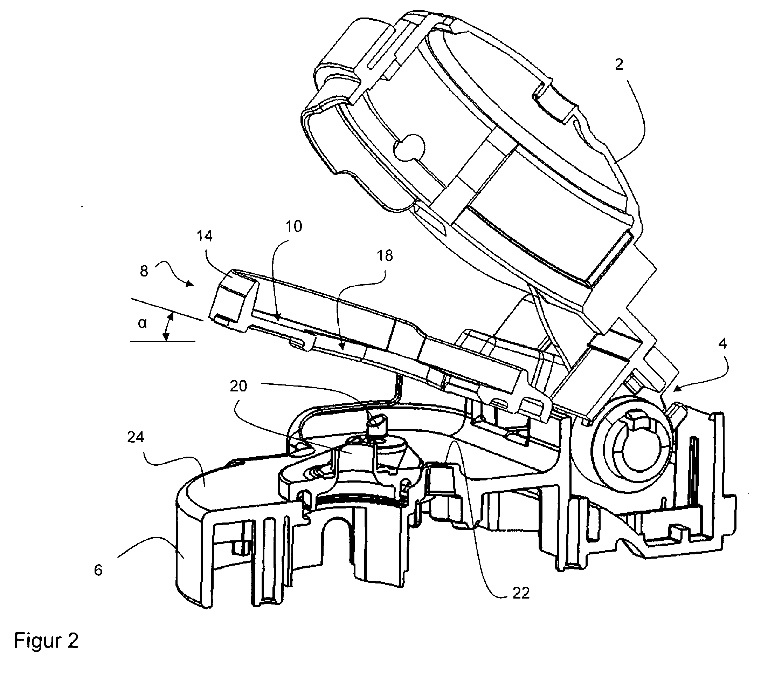

Die Figuren 1 und 2 stellen eine geöffnete Brühkammer dar, die zur Beladung mit einer Kapsel 12 bereit ist und zugleich die Ausgangsposition für die Durchführung des erfinderischen Verfahrens darstellt. Zu Beginn eines Zubereitungsvorgangs verschließt ein Bediener zunächst die Brühkammer, indem er das Brühkammer-Oberteil 2 in Richtung auf das Brühkammer-Unterteil 6 hinabschwenkt. Im Scharnier 4 ist ein Sensor angeordnet, der den Beginn dieser Bewegung erfasst. Er sendet daraufhin ein Signal an eine Steuerungseinrichtung, die ihrerseits das Lesegerät in Betrieb setzt. Sofort mit Einsetzen der Schließbewegung, also mit dem Herabschwenken des Brühkammer-Oberteils 2, erfasst das Lesegerät durch das Fenster 22 und den Durchlass 18 hindurch ein erstes Abbild des Strichcodes 32. Da sich die Brühkammer noch in einem Beladungszustand befindet, also der Kapselträger 8 noch abgeschwenkt ist, ist die Unterseite 30 der Kapsel 12 gegenüber dem Lesegerät bzw. der Ebene des Fensters 22 geneigt. Das Lesegerät erfasst also das Abbild des Strichcodes 32 unter einem Winkel α gegenüber der Waagrechten.

Mit Fortschreiten der Schließbewegung nähert sich der Träger 8 sukzessiv der horizontalen Lage an. Entsprechend verändert sich der Winkel α, er wird kleiner. Während der Schließbewegung erfasst das Lesegerät erforderlichenfalls weitere Abbilder des Strichcodes 32. Mit der veränderten Neigung des Kapselträgers 8 ändert sich auch die Winkellage der Kapsel 12 bzw. ihrer Unterseite 30 gegenüber dem Lesegerät. Jedes erfasste Abbild des Strichcodes 32 unterscheidet sich also durch seine Winkellage von dem zeitlich vor ihm erfassten Abbild. Die Winkeländerung ergibt jeweils unterschiedliche Erfassungssituationen und damit eine unterschiedliche Erkennbarkeit des Strichcodes 32 in seinem Abbild. Dies ist erwünscht, um gegebenenfalls nicht erkennbare Bereiche in einem früheren Abbild durch entsprechende erkennbare Bereiche eines späteren Abbildes ersetzen zu können. Zum Abschluss des Schließvorgangs befinden sich sowohl das Brühkammer-Oberteil 2 als auch der Kapselträger 8 in einer horizontalen bzw. einer dem Brühkammer-Unterteil 6 entsprechenden Lage. Der Winkel α geht gegen null. Dies stellt die Verschlussposition der Brühkammer, die Betriebslage der Kapsel 12 für die Zubereitung eines Getränkes und zugleich die Endposition für das Verfahren zu Erfassung unterschiedlicher Abbilder dar. Sie wird ebenfalls durch einen Sensor im Scharnier 4 detektiert, woraufhin eine entsprechendes Signal zur Abschaltung des Lesegeräts an die Steuereinrichtung weitergeleitet wird.

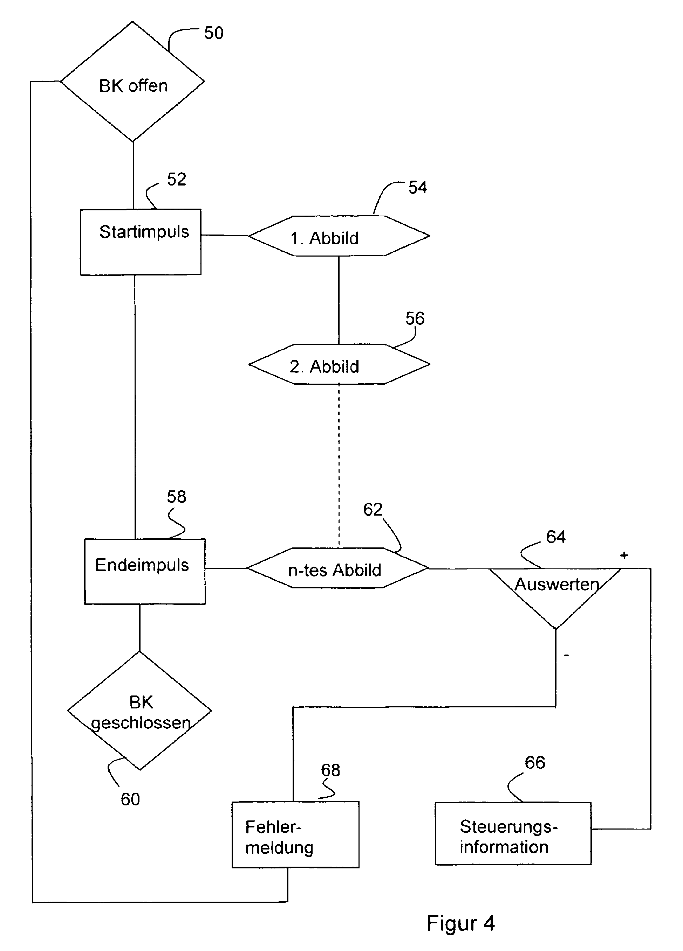

Die Figuren 4 bis 6 veranschaulichen als Diagramme drei Möglichkeiten von derartigen Ausleseverfahren. Am Anfang eines jeden Verfahrens steht die Brühkammer beladebereit offen, wie in den Figuren 1 und 2 gezeigt. Mit Einsetzen der Schließbewegung der Brühkammer detektiert der Sensor im Scharnier 4 den Beginn 50 der Schließbewegung, den er als Steuerungssignal an die Steuerungseinrichtung weiterleitet. Dieses Signal stellt den Startimpuls 52 für das Leseverfahren dar. Die Steuerungseinrichtung aktiviert daraufhin das Lesegerät, das unmittelbar darauf, also kurz nach Einsetzen der Schließbewegung der Brühkammer, ein erstes Abbild 54 des Strichcodes 32 generiert.

Entsprechend bewirkt der Sensor am Ende 60, also in der Verschlussstellung der Brühkammer gemäß Figur 3, ein Signal an die Steuerungseinrichtung, das den Endeimpuls 58 für den Erfassungsvorgang von Abbildern darstellt. Daraufhin schaltet die Steuereinrichtung das Lesegerät ab. Zu diesem Zeitpunkt bzw. unmittelbar darauf benötigt die Zubereitungsvorrichtung für ihren weiteren Betrieb die Steuerungsinformationen, die im Strichcode 32 verschlüsselt sind. Sollte keines der erfassten Abbilder verwendbar sein, so wird eine Fehlermeldung 68 generiert, die den Benutzer zur Wiederholung des Vorgangs auffordert. Dazu ist die Brühkammer zu öffnen und gegebenenfalls eine neue Kapsel 12 einzusetzen.

Insoweit stimmen alle Verfahren gemäß den Figuren 4 bis 6 überein. Sie unterscheiden sich lediglich durch die Auswertemethode der erfassten Abbilder 54, 56, 62. Gemäß einer ersten Ausführungsform nach Figur 4 erfasst das Lesegerät während des Schließvorgangs zwischen dem Startimpuls 52 und dem Endeimpuls 58 eine vorbestimmte Anzahl n von Abbildern 54, 56, 62. Das Verfahren gemäß Figur 4 nutzt also den Zeitraum zwischen dem Startimpuls 52 und dem Endeimpuls 58, während dem das Brühkammer-Oberteil 2 und der Kapselträger 8 auf das Brühkammer-Unterteil 6 verschwenkt werden, ausschließlich dazu, Abbilder 54, 56, 62 des Strichcodes 32 zu erfassen. Hat die Brühkammer am Ende 60 ihre Verschlussstellung erreicht, so erfolgt erst anschließend die Auswertung 64 der erfassten Abbilder.

Dies kann wiederum nach unterschiedlichen Methoden erfolgen. Nach einer ersten Möglichkeit wird das erste Abbild 54 auf vollständige Erkennbarkeit des Strichcodes 32 und damit auf seine Verwertbarkeit untersucht. Ist das Ergebnis dieser Untersuchung positiv, also der Strichcode 32 vollständig erkennbar und damit auswertbar, so erhält die Zubereitungsvorrichtung unmittelbar darauf die gewünschte Steuerungsinformation. Ist das Ergebnis des ersten Schritts der Auswertung negativ, so wird das zweite Abbild herangezogen und ebenfalls auf Auswertbarkeit hin untersucht. Positivenfalls wird die Steuerungsinformation generiert und weitergeleitet, negativenfalls wird das nächste Bild ausgewertet.

Nach einer zweiten Möglichkeit kann die Auswertung einen weiteren Schritt umfassen, in dem nämlich Abbilder 54, 56, 62 einander überlagert werden. Fehlende Informationen in einem Abbild können dann durch Informationen aus einem anderen Abbild ergänzt werden, so dass sich aus der Überlagerung die gewünschte Steuerungsinformation ableiten lässt. Dazu wird entweder das erste Abbild 54 von dem darauf folgenden Abbild 56 überlagert. Weil diese beiden Abbilder aufgrund ihrer relativ ähnlichen Winkelstellungen bei der Erfassung eine ähnliche Qualität aufweisen dürften, werden die Informationen des ersten Abbildes 54 möglicherweise auch im zweiten Abbild 56 nicht vollständig zu erkennen sein. Es bietet sich daher an, das erste Abbild 54 dem letzten Abbild 62 zu überlagern, weil ihre Winkellagen bei der Erfassung die größten Abweichungen und damit auch einen maximalen Qualitätsunterschied aufweisen.

Das Verfahren nach Figur 4 gliedert sich also im Wesentlichen in zwei Phasen: Während des Schließvorgangs der Brühkammer zwischen Startimpuls 52 und dem Endeimpuls 58 werden die Abbilder 54, 56, 62 erfasst. Nach Erreichen des Verschlussposition am Ende 60 der Brühkammer setzt der Auswertevorgang ein, in dem die erfassten Abbilder 54, 56, 62 auf Verwendbarkeit hin untersucht und gegebenenfalls die Steuerungsinformationen daraus generiert wird. Nach Erreichen der Verschlussposition der Brühkammer hat also die Zubereitungsvorrichtung noch nicht die für ihren weiteren Betrieb erforderliche Steuerungsinformation erhalten, sie muss vielmehr erst noch im Auswertungsschritt 64 ermittelt werden. Die Steuerungseinrichtung wird also nicht gleichzeitig mit unterschiedlichen Arbeitsschritten beaufschlagt, so dass sie einfacherer aufgebaut werden kann.

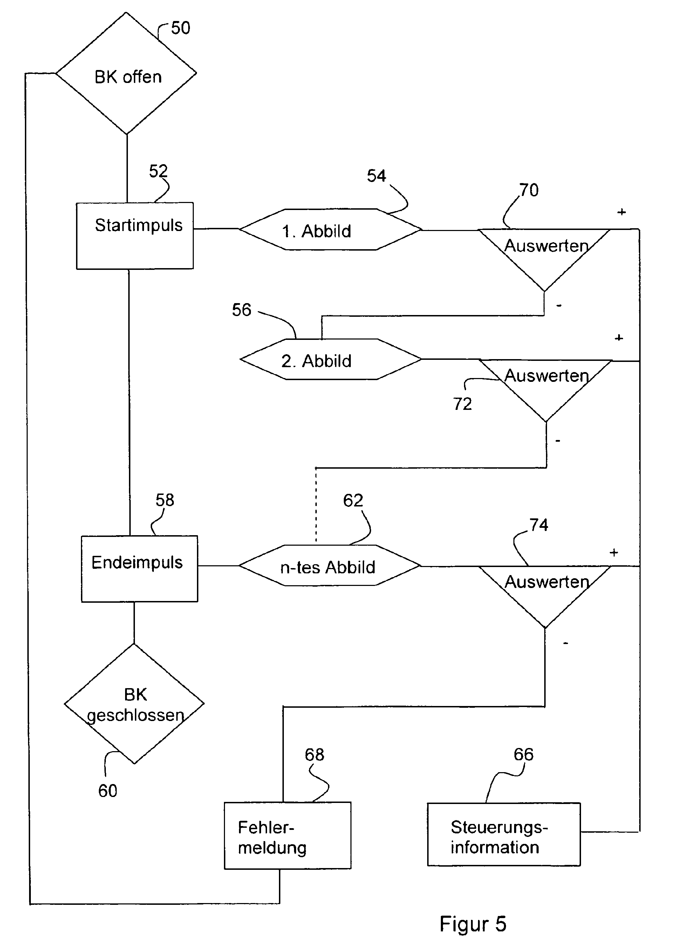

Ein davon abweichendes Prinzip verfolgt das Verfahren gemäß Figur 5. Es unterscheidet sich von dem in Figur 4 dargestellten Verfahren dadurch, dass jedes Abbild 54, 56, 62 sofort nach seiner Erfassung ausgewertet wird. Ist es vollständig verwertbar, so kann die gewünschte Steuerungsinformation sofort generiert werden. Die Erfassung weiterer Abbilder 56, 62 kann sich damit erübrigen. Ist das erste Abbild 54 dagegen nicht bzw. nicht vollständig verwendbar, so wird ein zweites Abbild 56 erfasst und ausgewertet. Positivenfalls kann die Steuerungsinformation ermittelt werden, womit sich wiederum die Erfassung weiterer Abbilder 62 erübrigt. Im negativen Fall dagegen muss ein weiteres Abbild erfasst werden und so weiter. Ein positives Ergebnis des Auswertungsschritts 72 kann entweder durch die bloße Auswertung des zweiten Abbilds 56 erzielt oder auch durch die Überlagerung des Abbildes 54 mit dem Abbild 56 und der Auswertung des Gesamtbildes.

Im Unterschied zum Verfahren gemäß Figur 4 werden also im Verfahren nach Figur 5 die Erfassung der Abbilder 54, 56, 62 und deren jeweiligen Auswertungen 70, 72, 74 gleichzeitig betrieben. Dementsprechend aufwendiger ist die Steuerungseinrichtung auszubilden. Durch den gleichzeitigen Betrieb kann sich allerdings die Zeitdauer nach Erreichen der Verschlussposition der Brühkammer bis zum möglichen Betriebsstart der Zubereitungsvorrichtung verkürzen, weil die Steuerungsinformationen 66 früher vorliegen.

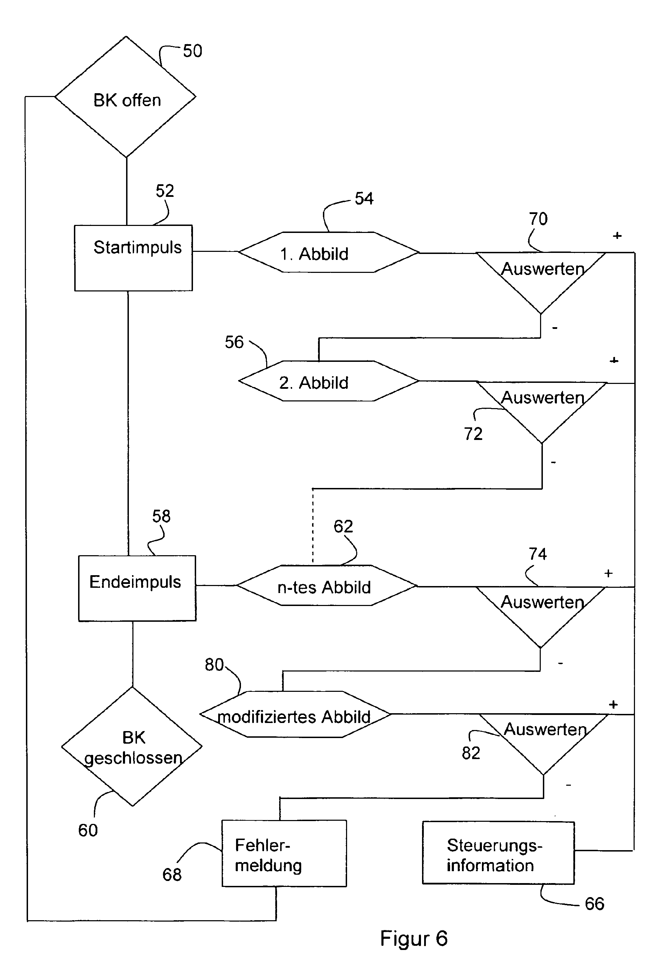

Die dritte Variante des erfinderischen Verfahrens nach Figur 6 unterscheidet sich von den vorher beschriebenen durch die Schritte 80 und 82. Das vorher ablaufende Verfahren kann sowohl gemäß dem Diagramm in Figur 4 als auch dem in Figur 5 gewählt werden. In Figur 6 ist beispielshalber das Verfahren gemäß Figur 5 dargestellt. Sollte sich bei diesem Verfahren im Auswertungsschritt 74 ein negatives Ergebnis einstellen, so wird nicht sofort eine Fehlermeldung 68 wie in Figur 5, sondern ein modifiziertes Abbild in einem weiteren Erfassungsschritt 80 erstellt. Das modifizierte Abbild wird im Verschlusszustand der Brühkammer gemäß Figur 3 erfasst. Es unterscheidet sich daher in seiner Winkellage nicht von dem Abbild 62. Ein dennoch dem gegenüber abweichendes Ergebnis wird dadurch erzielt, dass die Unterseite 30 der Kapsel 12 vor der Erfassung mechanisch gestreckt wird und/oder der Strichcode 32 unter unterschiedlichen Winkeln beleuchtet bzw. erfasst wird. Das modifizierte Abbild 80 wird anschließend in einem Schritt 82 in der oben beschriebenen Weise ausgewertet, indem es im Falle seiner nicht vollständigen Erkennbarkeit einem der vorherigen Abbilder 54, 56, 62 überlagert und das Gesamtbild ausgewertet wird. Sollte auch dieser Auswertungsschritt nicht zu dem gewünschten positiven Ergebnis führen, so wird nun erst die Fehlermeldung 68 ausgegeben.

Da es sich bei der detailliert beschriebenen Brühkammer und den Arbeitsverfahren des zugehörigen Lesegeräts um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Brühkammer in anderer Form als in der hier beschriebenen erfolgen. Die Verfahren können beispielsweise ohne separat generierte Start- und Endeimpulse oder mit anderen Auswertereihenfolgen betrieben werden. Weiterhin schließt die Verwendung der unbestimmten Artikel "ein" bzw. "eine" nicht aus, dass die betreffenden Merkmale auch mehrfach vorhanden sein können.

### Bezugszeichenliste

- 2: Brühkammer-Oberteil
- 4: Scharnier
- 6: Brühkammer-Unterteil
- 8: Kapselträger
- 10: Auflagefläche
- 12: Kapsel
- 14: Aufkantung
- 16: Positionieröffnung
- 18: Durchlass
- 20: Anstichkrone
- 22: Fenster
- 24: Oberseite des Brühkammer-Unterteils 6
- 30: Unterseite der Kapsel 12
- 32: Strichcode
- 34: Positioniernase
- 36: Oberseite
- 50: Beginn
- 52: Startimpuls
- 54: erstes Abbild
- 56: zweites Abbild
- 58: Endeimpuls
- 60: Ende
- 62: n-tes Abbild
- 64: Auswertung
- 66: Steuerungsinformation
- 68: Fehlermeldung
- 70: Auswertung
- 72: Auswertung
- 74: Auswertung
- 80: modifiziertes Abbild
- 82: Auswertung

## Patentansprüche

1. Verfahren zum Erfassen eines Abbildes eines ein- oder mehrdimensionalen Musters (32) auf einer In eine offene Brühkammer einer Zubereitungsvorrichtung für Getränke mit einem Lesegerät eingesetzten Getränke- oder Servicedisk (12), die vor dem Start des Zubereitungs- oder Servicevorgangs in einem Schließvorgang der Brühkammer von einer Beladeposition über Zwischenpositionen in eine Verschlussposition gebracht wird, **dadurch gekennzeichnet, dass** das Lesegerät aktiviert wird, bevor die Brühkammer verschlossen ist, so dass zumindest ein Abbild (54) des Musters (32) vor Erreichen der Verschlussposition erfasst wird.

2. Verfahren nach Anspruch 1, **dadurch gekennzeichnet, dass** beim Schließen der Brühkammer das Muster (32) geschwenkt wird.

3. Verfahren nach Anspruch 1 oder 2, **dadurch gekennzeichnet, dass** bereits in der Beladeposition der Brühkammer ein Abbild (54) des Musters (32) erfasst wird.

4. Verfahren nach einem der obigen Ansprüche, **dadurch gekennzeichnet, dass** das Lesegerät beim Schließen der Brühkammer mehrere Bilder (54, 56, 62) des Musters (32) erfasst.

5. Verfahren nach dem obigen Anspruch, **dadurch gekennzeichnet, dass** jedes erfassten Abbild (54, 56) auf Erkennbarkeit überprüft wird und im Fall der Nichterkennbarkeit während des Schließvorgangs der Brühkammer ein weiteres Abbild (56, 62) des Musters (32) erfasst wird.

6. Verfahren nach einem der obigen Ansprüche, **dadurch gekennzeichnet, dass** mehrere Abbilder (54, 56, 62) zur Auswertung überlagert werden.

7. Verfahren nach Anspruch 3 oder 5, **dadurch gekennzeichnet, dass** während des Schließvorgangs der Brühkammer mehrere Abbilder (54, 56, 62) erfasst und erst anschließend auf Erkennbarkeit hin ausgewertet werden.

8. Verfahren nach einem der obigen Ansprüche, **dadurch gekennzeichnet, dass** eine Oberfläche (30) der Disc (12), auf der das Muster (32) aufgebracht ist, beim Verschließen der Brühkammer durch ein Streckelement am Lesegerät mechanisch gestreckt und/oder das Muster (32) nach dem Verschließen der Brühkammer unter unterschiedlichen Winkeln beleuchtet oder erfasst wird.

9. Lesegerät einer Getränkezubereitungs vorrichtung zum Ablesen eines ein- oder mehrdimensionalen Musters (32) das zur Erfassung eines Abbildes (54, 56, 62) des Musters (32) zur Durchführung eines Verfahren nach einem der Ansprüche 1 bis 8 dient, mit einem Speicher zur Zwischenspeicherung mehrerer Abbilder (54, 56, 62), einer Überlagerungseinheit der Abbilder (54, 56, 62) und einer Auswerteeinheit für die ggf. überlagerten Abbilder (54, 56, 62), **gekennzeichnet durch** eine Steuerungseinrichtung, die dazu ausgebildet ist, die Erfassung der Abbilder (54, 56, 62) während des Schließens der Brühkammer zu ermöglichen.

10. Lesegerät nach dem obigen Anspruch, **gekennzeichnet durch** einen Schalter zur Erfassung des Beginns der Bewegung zum Verschließen der Brühkammer.

11. Lesegerät nach den Ansprüchen 9 oder 10 mit einem Prozessor für seine Steuerung, **dadurch gekennzeichnet, dass** der Prozessor und/oder der Speicher mit einem Prozessor und/oder einem Speicher der Zubereitungsvorrichtung kombiniert ist.

12. Zubereitungsvorrichtung für Getränke mit einem Lesegerät nach einem der Ansprüche 9 bis 11.

## Claims

1. Method for recording an image of a one- or multi-dimensional pattern (32) on a drinks or service disc (12) which is used in an open brewing chamber of an apparatus for preparing beverages with a reading device and which is brought from a loading position, via intermediate positions, into a sealed position before the start of the preparation or service procedure in a procedure for closing the brewing chamber, **characterized in that** the reading device is activated before the brewing chamber is sealed, with the result that at least one image (54) of the pattern (32) is recorded before the sealed position is reached.

2. Method according to claim 1, **characterized in that** the pattern (32) is pivoted when the brewing chamber is being closed.

3. Method according to claim 1 or 2, **characterized in that** an image (54) of the pattern (32) is already recorded when the brewing chamber is in the loading position.

4. Method according to one of the above claims, **characterized in that** the reading device records several images (54, 56, 62) of the pattern (32) when the brewing chamber is being closed.

5. Method according to the above claim, **characterized in that** each captured image (54, 56) is checked for recognizability and, if not recognizable, a further image (56, 62) of the pattern (32) is recorded during the procedure for closing the brewing chamber.

6. Method according to one of the above claims, **characterized in that** several images (54, 56, 62) are superimposed for the evaluation.

7. Method according to claim 3 or 5, **characterized in that** several images (54, 56, 62) are recorded during the procedure for closing the brewing chamber and only subsequently evaluated for recognizability.

8. Method according to one of the above claims, **characterized in that** during the sealing of the brewing chamber a surface (30) of the disc (12), onto which the pattern (32) is applied, is mechanically stretched by a stretching element on the reading device and/or after the sealing of the brewing chamber the pattern (32) is illuminated or recorded at different angles.

9. Reading device for a beverage preparation apparatus for reading a one- or multi-dimensional pattern (32) in order to record an image (54, 56, 62) of the pattern (32) in order to carry out a method according to one of claims 1 to 8, with a memory for buffering several images (54, 56, 62), a unit for superimposing the images (54, 56, 62) and a unit for evaluating the optionally superimposed images (54, 56, 62), **characterized by** a control device which is designed to make it possible to record the images (54, 56, 62) when the brewing chamber is being closed.

10. Reading device according to the above claim, **characterized by** a switch for recording the start of the movement for sealing the brewing chamber.

11. Reading device according to claim 9 or 10 with a processor for controlling it, **characterized in that** the processor and/or the memory is combined with a processor and/or a memory of the preparation apparatus.

12. Preparation apparatus for beverages with a reading device according to one of claims 9 to 11.

## Revendications

1. Procédé de saisie d'une image d'un motif en une ou plusieurs dimensions (32) sur une capsule de boisson ou de service (12) intégrée avec un lecteur dans une chambre ouverte de percolation d'un dispositif de préparation de boissons, capsule amenée d'une position de charge en une position de fermeture en passant par des positions intermédiaires avant le début du processus de préparation ou de service durant un processus de fermeture de la chambre de percolation, **caractérisé en ce que** le lecteur est activé avant la fermeture de la chambre de percolation de sorte à ce qu'au moins une image (54) du motif (32) soit saisie avant que ne soit atteinte la position de fermeture.

2. Procédé selon la revendication 1, **caractérisé en ce que** le motif (32) est pivoté lors de la fermeture de la chambre de percolation.

3. Procédé selon la revendication 1 ou 2, **caractérisé en ce qu'**une image (54) du motif (32) est déjà saisie en position de charge de la chambre de percolation.

4. Procédé selon l'une des revendications ci-dessus, **caractérisé en ce que** le lecteur saisit plusieurs images (54, 56, 62) du motif (32) lors de la fermeture de la chambre de percolation.

5. Procédé selon la revendication ci-dessus, **caractérisé en ce que** chaque image saisie (54, 56) est vérifiée en termes de lisibilité et **en ce qu'**une image supplémentaire (56, 62) du motif (32) est saisie en cas de non lisibilité durant le processus de fermeture de la chambre de percolation.

6. Procédé selon l'une des revendications ci-dessus, **caractérisé en ce que** plusieurs images (54, 56, 62) sont superposées à fin d'évaluation.

7. Procédé selon la revendication 3 ou 5, **caractérisé en ce que** durant le processus de fermeture de la chambre de percolation plusieurs images (54, 56, 62) sont saisies et ensuite seulement évaluées en termes de lisibilité.

8. Procédé selon l'une des revendications ci-dessus, **caractérisé en ce qu'**une surface (30) de la capsule (12), sur laquelle est apposé le motif (32), est mécaniquement étirée par un élément d'étirement au niveau du lecteur lors de la fermeture de la chambre de percolation et/ou le motif (32) est éclairé ou saisi sous différents angles après la fermeture de la chambre de percolation.

9. Lecteur d'un dispositif de préparation de boissons destiné à lire un motif en une ou plusieurs dimensions (32), qui sert à la saisie d'une image (54, 56, 62) du motif (32) pour l'exécution d'un procédé selon l'une des revendications 1 à 8, avec une mémoire de mémorisation intermédiaire de plusieurs images (54, 56, 62), avec une unité de superposition des images (54, 56, 62) et une unité d'évaluation des images (54, 56, 62) éventuellement superposées, **caractérisé par** un dispositif de commande structuré de telle sorte à permettre la saisie des images (54, 56, 62) durant la fermeture de la chambre de percolation.

10. Lecteur selon la revendication ci-dessus, **caractérisé par** un commutateur pour la saisie du début du mouvement de fermeture de la chambre de percolation.

11. Lecteur selon les revendications 9 ou 10 avec un processeur en assurant la commande, **caractérisé en ce que** le processeur et/ou la mémoire sont combinés à un processeur et/ou une mémoire du dispositif de préparation.

12. Dispositif de préparation de boissons avec un lecteur selon une des revendications 9 à 11.
